# EUROPEAN PATENT APPLICATION

(11) **EP 2 735 395 A1**
(43) Date of publication of application: **28.05.2014**
(21) Application number: 12275179.5
(22) Date of filing: 21.11.2012
(51) Int. Cl.: B23K 9/20, B29C 65/00

(54) **Hybrid joint projections**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The invention relates to the manufacture of hybrid joints more particularly to the manufacture of joints between parts (1,4) made of differing materials and most particularly to the manufacture of a metallic component (1) comprising a plurality of preformed projections (2) which penetrate composite fabric (8) within a composite part. Particularly there is a method of forming an array of projections (2) on a surface of a metallic component (1), the method including the steps of bringing at least one preformed projection into at least close proximity to the surface of the component and causing a portion of the projection and a portion of the component in the region of an intersection thereof to at least partially melt, and causing them to be joined together.

## Description

The invention relates to the manufacture of hybrid joints more particularly to the manufacture of joints between parts made of differing materials and most particularly to the manufacture of metallic component comprising a plurality of preformed projections which penetrate composite fabric within a composite part.

Hybrid joining may be defined as 'a method that makes use of multiple joining techniques such as mechanical interlocking and adhesive bonding'. Hybrid joints are able to offer improvements in a range of mechanical properties including, but not limited to, ultimate strength, durability and damage tolerance.

Adhesive joints are renowned for having poor performance in 'peel' loading conditions. Hybrid joints having simple cylindrical projections anchored on a first component and extending through a second are well suited to shear loading. However, the projections may only moderately improve 'peel' loading performance if they 'pull-out' of the second component, for example a fibre reinforced composite component, too easily during failure.

Aircraft and defence platforms now regularly use composite materials instead of metals due to their high specific stiffness and strength, low weight, resistance to corrosion and potentially lower fabrication costs. Despite this, metals are still required for high tolerance surfaces, fire resistance, for high volume manufacture and low cost assembly.

By combining composites and metals in a single structure, it is possible to gain advantage from each respective material which can lead to a great deal more design flexibility. An example of this would be marine propulsion shafts. Previously manufactured from metals, these may now be formed from lightweight, corrosion resistant composite materials. Metallic end fittings are nevertheless required for bearing interfaces as the composite material does not have the necessary wear resistance or dimensional tolerance.

The main challenge with multi-material structures is how best to join dissimilar materials together. Fastened joints suffer from increased weight due to the necessity to reinforce the composite section in the region of any machining operations, including the additional mass of fasteners. Composites are also particularly sensitive to notches that sever the load bearing fibres, resulting in the performance of the composite being degraded and additional stress concentrations being introduced. Adhesive bonding is commonplace, but is sensitive to initial surface preparation, hot/wet environments, impact damage and may require a large bond area. Furthermore, high strength adhesively bonded joints tend to exhibit sudden catastrophic failure.

Hybrid joining has accordingly been considered for connecting composites to metals, combining mechanical interlocking features with adhesive bonding. In a typical embodiment, the joint between a fibre reinforced polymer and a metal component uses metallic projections protruding from the metallic component. The projections are inserted into a composite preform of the fibre reinforced polymer, upon assembly, so as to interlock with the fibre reinforcement of the composite material. Resin is then combined with the fibre preform and co-cured with the metallic component in place to create a supplementary adhesive bond.

Advanced hybrid joints are most commonly created by surface restructuring of the metallic component to produce surface projections, which usually resemble cylindrical projections. Surface restructuring may be through redistributing the metallic material or by addition of material.

WO 2004/028731 A1 details a method by which an electron beam is used to restructure the surface of a component in order to create projections. The electron beam melts the material and drives the molten pool into a new location on the surface.

WO 2008/110835 A1 details a method by which additive layer manufacturing (ALM) processes are used to additively build up projections on a component. Additive layer techniques can be difficult to scale-up for rapid manufacture. Furthermore, certain types of projection, such as 'barbs' with diagonal undercuts, cannot be made easily with all additive layer processes. Practically, these types of protrusion would need to be made with a costly powder-bed variant of additive layer processing. Powder-bed formed articles typically possess larger internal void fractions, compared to non-ALM articles.

Ucsnik et al. Composites Part A, 41 (2010) p369-374 discloses a method of hybrid joint manufacture using a continuous feed process known as Cold Metal Transfer (CMT). In this electrical welding process, the distal tip of a continuous spool of the wire is fused to a metallic component. A high current is then applied to the fused wire in combination with an applied tensile force. This serves to fracture the feed wire some distance from the weld, thus leaving a projection on the surface.

According to a first aspect of the invention there is provided a method of forming an array of projections on a surface of a metallic component, the method including the steps of bringing at least one preformed projection into at least close proximity to the surface of the component and causing a portion of the projection, and a portion of the component in the region of an intersection thereof, to at least partially melt, and causing them to be joined together.

In a highly preferred arrangement the method comprises the steps of bringing at least one preformed projection into at least close proximity to the surface of the component and causing an electrical current to flow between the projection and the surface of said component for a predetermined time, such that said current causes a partial melt of a portion of the projection and a portion of the component in the region of an intersection thereof.

In a highly preferred aspect there is provided a method of forming a series of projections on a surface of a metallic component, the method including the steps of bringing at least one preformed projection into at least close proximity to the surface of the component and causing an electrical current to flow between the projection and the surface of said component for a predetermined time whereby at least partially to melt a portion of the projection and the component in the region of an intersection thereof and causing them to join together.

Prior art methods such as that described by Ucsnik *et al.,* provide a means of introducing projections, formed from a continuous spool of wire, to form each projection in turn. The rate of manufacture with a CMT process is limited by the requirement for the fused wire to cool before applying the break-off current and tensile force. The selection of final cross section and length of the projections are limited to what may be induced by control of the welding parameters (applied current, retraction rate, dwell time.). Therefore CMT is not well suited to highly complex projections of varying cross section, long projection lengths, or applications where high manufacturing rates are required.

In a highly preferred arrangement, the preformed projection may be manufactured separately to the final process, such that the preformed projection may be subjected to quality control testing prior to attachment to the metallic component. This reduces the chances of adding defective projections to the component. The prior art processes form the projections in-situ either stepwise layering or by shearing wire from a continuous feed, and thus are more prone to faults during their manufacture. As the prior art projections are only formed in-situ their projections can only be assessed for quality purposes when located on the component.

In a highly preferred arrangement of the current invention a plurality of preformed projections may be simultaneously brought into at least close proximity to the surface of the component, such that said plurality of projections are caused substantially simultaneously to be joined to said component, in one action. Thus, allowing for a high throughput manufacture of components containing the preformed projections, to be achieved.

It may be desirable to provide manufacturing apparatus which comprises at least one delivery head, said head comprising a plurality of projection retainers, each of which are capable of gripping a preformed projection, and applying an electrical current to said preformed projection. The delivery head may be arranged so as to provide, one, part or all of the preformed projections to the component, such as, for example simply providing a row or column of preformed projections, or more preferably for high through put manufacture, the delivery head may attach substantially all of the required preformed projections to the component in one operation. The delivery head may also provide inert gas or reagents commonly used in welding techniques to the component.

During the welding phase, the electrical current causes the partial melt of the surface of the component and of the preformed projection by resistive heating or by the generation of an electrical arc, preferably by capacitive discharge welding. Heating by electrical means ensures that the heat is localised to the region of intersection, where the preformed projection abuts the metallic substrate.

An electrical arc may be created either by bringing the projection and surface of the component together to a separation gap where they are in sufficiently close proximity to allow an arc to form; such that wherein said projection is moved towards the surface of the component in combination with the application of an electrical current, at a predetermined distance an electrical arc is created between the projection and the surface of the component in the region of an intersection, and the adjacent tip of the projection; upon completion of a predetermined time, the projection is brought into intimate contact with the portion of partially molten surface of the component, and a weld formed.

Alternatively the gap for the arc may be created by separating, from an abutted position, the component and projection to form a gap across which the arc can form; such that wherein said at least one preformed projection is brought into intimate contact with the surface of the component and an electrical current is initiated, the projection is simultaneously lifted away from the surface of the component to cause an electrical arc, said arc melting a portion of the surface of the component in the region of an intersection, and the adjacent tip of the projection; upon completion of a predetermined time, the projection is brought into intimate contact with the portion of partially molten surface of the component, and a weld formed.

The partial melt may also be created by resistive heating, wherein said projection is brought into electrical contact with the surface of the component in combination with the application of an electrical current to cause resistive heating in the region of an intersection, said resistive heating, upon completion of a predetermined time, causing a portion of the surface of the component to be partially molten and a portion of the projection to be partially molten, and a weld forme. After a predetermined time, once a sufficient portion of the surface of the component and projection has melted and mixed, the electrical supply is shut-off and the material solidifies on cooling to leave a welded joint.

In one arrangement of the invention the plurality of preformed projections may be selected from at least two different materials. During manufacture, the plurality of projection retainers may be selectively loaded with different preformed projections, to create the desired arrangement on the surface of the component.

The preformed projections may be prepared from any material, such as a metallic material, or a metal coated non conducting material, preferably, the material is a metal or metal alloy. To enhance the welding process the metallic preformed projections may have a further layer of metal or cleaning agent to facilitate the weld.

The preformed projection material may be selected from the same material as the metallic component, or made from a different material.

The preformed projection may be prepared using any known metal preparation technique, such as, for example, casting, forging, machining and press forming.

The preformed projections may be selected to have any cross section or 3D configuration or shape. Certain 3D shapes, such as, for example barbs with diagonal undercut geometry, are known to be difficult to produce with ALM techniques. In one arrangement of the invention, the plurality of preformed projections may be selected from at least two different 3D configurations, such as, for example non-symmetrical in cross section or irregularly shaped preformed projections. A selection of at least two different 3D configuration projection types may be utilised to induce different failure modes in specific loading configurations, and may be used to promote ductile failure characteristics where an unmodified joint might typically fail catastrophically.

The methods of the invention permit a short duration of applied energy, resulting in a low heat affected zone at the region of interaction and correspondingly reduced thermal stress and work piece distortion, unlike electron beam and additive layer techniques, which are known to show greater damage or distortion to the metallic component.

According to a further aspect of the invention there is provided a metallic component suitable for forming a hybrid joint between said metallic component and a fibre reinforced composite component, the joint surface of the metallic component defining a plurality of preformed projections extending therefrom, wherein said projections are formed by a method defined herein.

According to a further aspect of the invention there is provided a method of forming a hybrid joint between a fibre reinforced composite component and a metallic component, the metallic component and the composite component each defining a joint surface for mating with the joint surface of the other to join the two components together and the composite component defining a free surface opposed to the joint surface thereof, the joint surface of the metallic component defining an array of preformed projections, prepared by a method defined herein, extending therefrom with each projection defining a projection head at an end distal from the joint surface, the method including the steps of pressing together the joint surfaces of the two components whereby to cause the array of projections to penetrate through the fibre reinforcing material.

In a highly preferred arrangement the method comprises the further steps of modifying the effective cross sectional shape of the projection heads whereby to increase the constraint applied to the composite component against peeling of the composite component from the joint surface of the metallic component.

Our research has shown that spacing an array of surface projections to interlock with gaps in the reinforcing textile of a preform for the fibre reinforced composite, such as may be encountered at the crossover points in plain-woven fabric, minimises fibre disruption. This makes it less likely for the projections to degrade the mechanical performance of the composite component. For the same reason, hybrid joints are usually made with projections having a diameter less than 3 mm. Despite this, it may be reasonable to use projections of a diameter greater than 3 mm for structures incorporating very coarse woven composite reinforcement fabric.

Our research has also shown that the spacing of the surface projections may be varied to control stress distribution across the joint.

The array of surface projections can often pull-out of the composite component during failure, especially in the case of simple cylindrical or pointed-top projections. While this pull-out failure mechanism may sometimes be exploited as a method of energy absorption, resisting pull-out can increase the energy required to separate the adherends and thus the ultimate strength of the joint. Further, the load threshold at which damage initiation or 'onset' is observed may be increased through the inclusion of non-cylindrical heads to the projections.

Non-cylindrical projections such as ball-headed projections have been shown to improve the properties in peel loading by constraining adherend separation and resisting projection 'pull-out'. However, non-cylindrical projections are more difficult to push through the composite reinforcement fabric and damage may therefore be caused to the reinforcement fibres during penetration.

This provides a short process that may be completed after the composite reinforcement fabric has been placed in position and the projections have penetrated through the fibres and either before or after resin infusion of the hybrid joints. It will be understood that resin infusion of the fibre fabric may be replaced by using a pre-impregnated fibre preform, a "pre-preg". However, the use of pre-preg may restrict movement of the fibres out of the way of the projections, during penetration, and may result in damage to the fibres.

The process of deforming the pre-formed projection could be executed during or following curing of the composite component. Alternatively, the process may be applied before curing, in order to apply a constraint, or compressive force, to a dry preform or pre-impregnated (pre-preg) layup. Applying the process before curing facilitates simultaneous co-curing of the joint with the retaining features in place. This will usually result in a more secure joint, owing to the increased constraint applied by the additional adhesive bonding and the more precise dimensional tolerances achievable.

Vacuum Assisted Resin Transfer Moulding (VARTM) of a reinforcing dry fibre preform, or use of a pre-preg system, are the most common methods. However, the use of pre-preg is more challenging as the resin can restrict movement of fibres during projection penetration, which may lead to greater fibre damage.

Where high strength materials are used for the metalliccomponent, it may be favourable to have weaker projection tips, for forming purposes. This may be achieved by reducing material in the area of the projection that will be deformed or by selecting a weaker material for this area.

The invention will now be described by way of example with reference to the accompanying drawings of which:-
Figure 1 is a perspective view of a hybrid joint between a metallic component and a fibre reinforced composite component, according to the invention;
Figures 2, 3, 4 and 5 show, in section, an example of how one process of the invention is applied to a composite component and a metallic component to join them together;
Figures 6, 7 and 8 show two methods of arc welding a preformed projection onto a metallic composite.
Figure 9 shows a top view of the delivery head with a plurality of projection retainers.
Figure 10 shows a resistive heating welding method of locating the preformed projections onto a metallic composite.

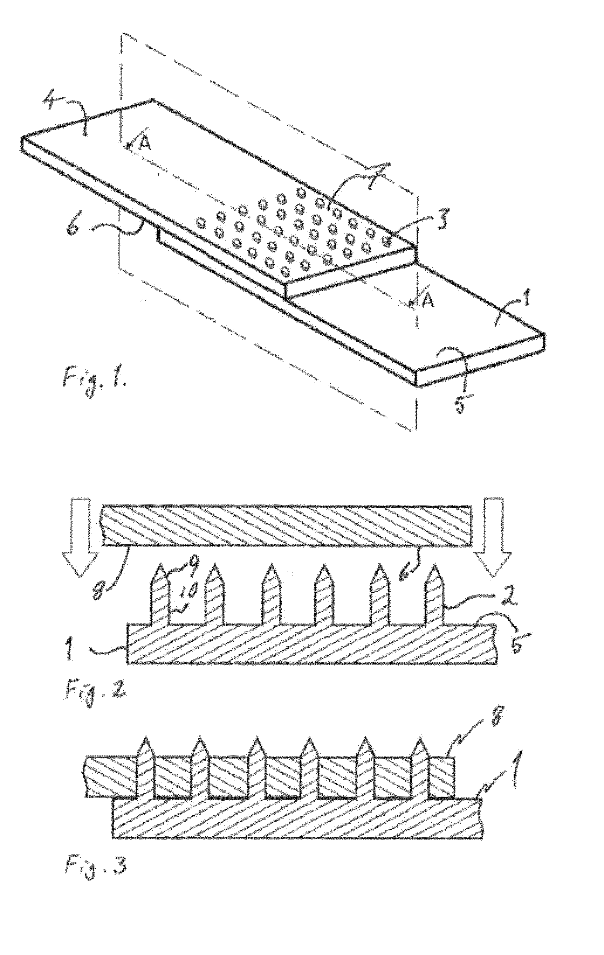

Referring to the drawings, Figure 1 shows, in a perspective view, a metal/composite hybrid joint. A metallic component 1 has a series of spaced preformed projections 2 (See Figure 2) optionally having a constraint in the form of an enlarged preformed projection head 3. A fibre reinforced composite laminate component 4 is joined to the metallic component by adhesion between overlapping parts of surfaces 5, 6 of the components and peeling of the composite component 4 from the metallic component is restricted by the enlarged heads 3 bearing down on an upper surface 7 of the composite component.

Figures 2 to 5 show how the process of the invention is operated to join together a metallic component 1 and a layup 8 for a composite component. The layup 8, here, is in the form of a "pre-preg", meaning that the layup has already been impregnated with a polymer resin matrix material (not shown separately). However, the layup could equally well be in the form of a fibre preform which has not yet been impregnated with matrix material. The metallic component 1 defines a joint surface 5 which itself defines an array of cylindrical preformed projections 2 having conical heads 9. The conical heads 9 have a cross sectional area, measured in a direction parallel to the joint surface 5, which is no greater than that of stems 10 of the preformed projections. The layup 8 defines its own joint surface 6 for engagement with the joint surface 5 of the metallic component 1. For joint assembly, pressure is applied to the layup 8, in the direction of the arrows, so that the preformed projections 2 pierce the layup 8 and pass through it. The cross sectional area and head shape of the preformed projections 2 enable them easily to pass between fibres of the layup 8, whether the fibres are woven or non-woven.

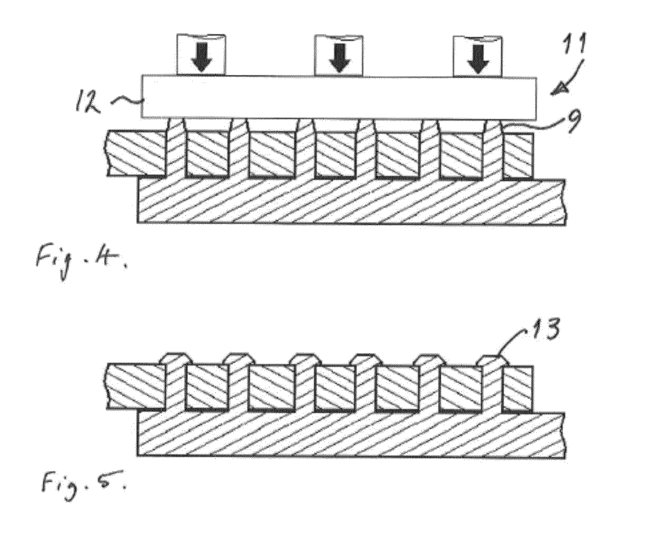

Once the layup has been pressed into position, with the joint surfaces 5 and 6 in contact, a press 11 having a forming tool 12 is lowered onto the preformed projection heads 9 to deform them into the shape 13 shown, in Figure 5. Deformed preformed projection heads 13 can be seen to have an enlarged cross sectional area which is greater than that of the stems 10. The preformed projection heads 13 thus constrain the layup 8, preventing any movement of the layup axially of the preformed projections, in particular peeling movement, from occurring. The preformed projection heads 13 can be deformed whereby merely to contact an upper surface 7 of the layup 8. Alternatively, they can be further deformed so as to maintain the fibres of the layup in compression, if dictated by the particular joint design.

Once the layup 8 has been locked into position by the enlarged preformed projection heads 13, the conjoined components 1, 4, are subjected to heat and pressure, here using an autoclave, whereby to cure the resin matrix of the pre-preg layup and bond the two components together.

It will be appreciated that the deformed shape of the preformed projections 2, as shown in Figure 5, will prevent peel loads applied to the joint from peeling the composite material away from the metallic component.

The arrangement of Figures 2 to 5 is suitable for a large maritime joint. Here, 2.5 mm mild steel sharp tipped conical preformed projections 2 having deformable tips for pressure forming of caps are added to metallic end tabs 1 for welding to a ship's primary superstructure. A glass fibre textile layup 8 is laid up on top of the preformed projections 2. An intensifier is placed on top of the layup and pressure is applied by a vacuum bag (not shown) used for infusing the joints. The joints are infused and cured under pressure in accordance with the requirements of the composite material. Pressure is then applied to the protruding preformed projection heads 9 such that they are deformed into flat caps 13 that constrain movement of the composite component 4.

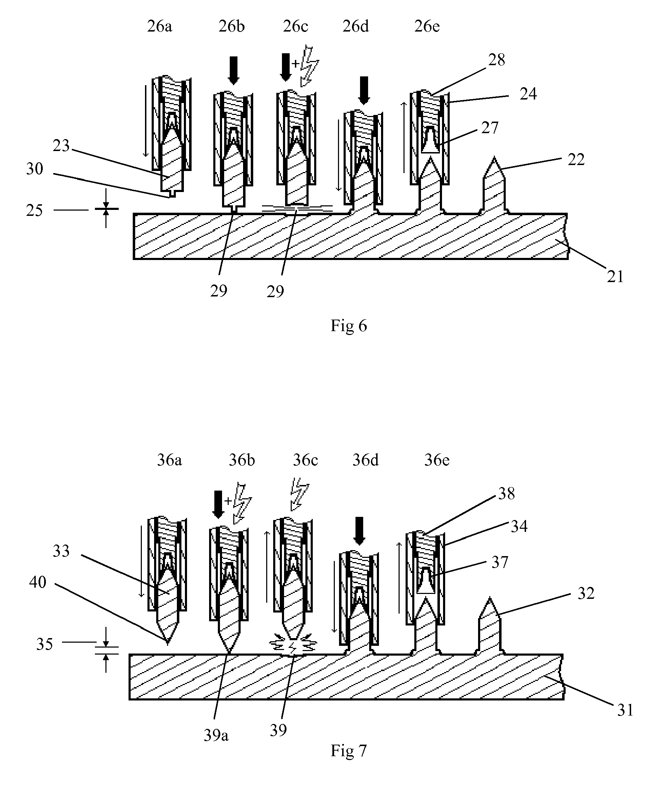

Turning to figure 6 there is shown a stepwise sequence 26a-26e of method steps to form a welded preformed projection 22, via capacitor discharge welding. In step 26a, the preformed metallic projection 23 is located in a collet or projection retainer 24, and is constrained axially by a grip such as a loaded locating pin 27. In step 26b, the lower tip 30 of the projections 23 is placed in electrical contact with the component 21, at a region of intersection 29a, such that there is substantially zero distance 25 between the projection and component. Step 26c shows a short duration electrical current being applied by conductor 28 which forms part of the grip 27. The current flows through the projection 23 and hence surface 21. Resistive heating 29 occurs between the projection 23 and the component 21, which causes localised melting/vaporisation (step 26c) of the lower projection tip 30. The continued application of electrical current causes an electrical arc to be initiated between the projection 23 and component 21 causing additional localised melting of the projection 23 and the component 21 which then mix locally under an applied force (bold arrows) to form a welded connection( step 26d). Finally release of the grip 27, step 26e, reveals the welded projection 22. The percussive/capacitor discharge stud welding technique is ideally suited for welding preformed projections for the purposes of forming hybrid joints.

Turning to figure 7 there is shown a sequence 36a-36e of method steps, for arc welding a preformed projection 33 to a component 31, to form a welded preformed projection 32. In step 37a, the preformed metallic projection 33 is held in a collet or projection retainer 34, and is constrained axially by a loaded locating pin 37. In step 36b, the lower tip 40 of the projection 33 is placed in electrical contact with the component 31, at a region of intersection 39a. Simultaneously, a short duration electrical current is applied via conductor 38, whilst the projection 33 is removed from the component to a predetermined height 35, such that in step 36c an arc is formed. The arc spans the gap between the projection 33 and the surface of the component 31, in a region of an intersection 39a. The arc causes localised melting 39 to occur at the points where the arc forms on the projection 33 and the component 31. Step 36d, shows that once localised melting occurs at the interface of the two components, the projection is forced back onto the component which then mix locally to form a welded connection. Finally, the collet 34 and loading pin 37 are retracted, step 36e, revealing the welded projection 32.

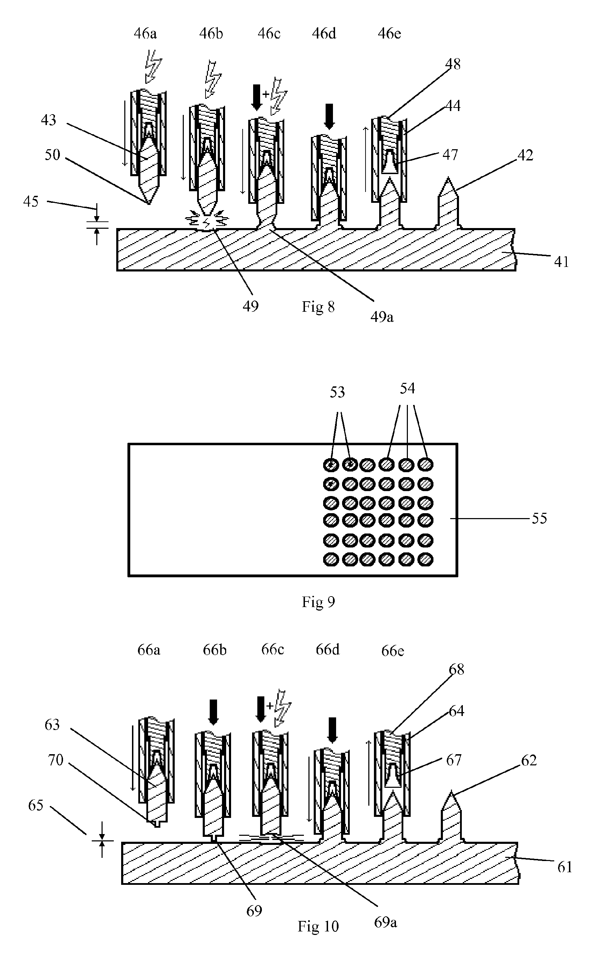

Turning to figure 8 there is shown a sequence 46a-46e of method steps, for arc welding a preformed projection 43 to a component 41, to form a welded preformed projection 42. In step 46a, the preformed metallic projection 43 is held in a collet or projection retainer 44, and is constrained axially by a loaded locating pin 47. In step 46b, an electrical current is applied via a conductor 48 in the welding head, to the projection 43 and the lower tip 50 of the projection 43 is brought towards the component 41, in the region of intersection 49a. Once the projection 43 is moved such that it arrives at a predetermined height 45, an arc will form. The arc spans between the projection 43 and the surface 42, in a region of an intersection 49a. The arc causes localised melting 49 to occur at the points where the arc forms on the projection 43 and the component 42. Steps 46c and 46d, show that once localised melting occurs at the interface of the two components, the projection is forced onto the component which then mix locally to form a welded connection (step 46d). Finally the collet 44 and loading pin 47 are retracted, step 46e, revealing the welded projection 42.

Turning to figure 9, there is shown a schematic of a delivery head 55, with a plurality of projection retainers 54, each of which can be loaded with a pre formed projection 53. The projections 53 may be loaded from a feed or magnetised pick up. The delivery head 55 may then be brought into contact with a metallic component(not shown), by one of the methods above, to weld the pre-formed projections thereon.

Turning to figure 10 there is shown a stepwise sequence 66a-66e of method steps, for resistive heating a preformed projection 63 to a component 61, to form a welded preformed projection 62. In step 66a, the preformed metallic projection 63 is located in a collet or projection retainer 64, and is constrained axially by a grip such as a loaded locating pin 67. In step 66b, the lower tip 70 of the projections 63 is placed in electrical contact with the component 61, at a region of intersection 69a, such that there is substantially zero distance 65 between the projection and component. Step 66c shows a short duration electrical current being applied by conductor 68 which forms part of the grip 67. The current flows through the projection 63 and hence surface 61. Resistive heating 69 occurs between the projection 63 and the component 61, which causes localised melting (step 66d) at the interface of the two components, which then mix locally to form a welded connection( step 66d), optionally the weld is created with an applied force(bold arrows). Finally release of the grip 67, step 66e, reveals the welded projection 62. The percussive/capacitor discharge stud welding technique is ideally suited for welding preformed projections for the purposes of forming hybrid joints.

### Detailed description

Preparation of a hybrid joint between a mild steel panel and a glass fibre reinforced polymer composite (GFRP). As an example a steel section measures ~2m x 1 m and the composite panel ~3m x 2m, the two panels are joined by a hybrid joint means commonly a single lap joint, which may have for example an overlap region of 2m x 150mm. The steel overlap may have an array of 500 preformed projections that have been welded to the surface at an angle normal to the steel plane.

The preformed projections may be manufactured from mild steel having a circular cross section with diameter 2.4 mm and length 10 mm. The end of each preformed projection is formed into a symmetrical, sharp tipped cone having interior angle 60°.

The preformed projections are placed in a hopper that dispenses an individual preformed projection at controlled intervals so that it may be fed to the intended attachment site via a pneumatic transport system. Alternatively, the projections may be supplied by any feed or loading mechanism such as a magazine feed. Upon reaching the attachment site, the preformed projection is held in contact with the steel component at an angle normal to the steel surface. Alternatively, a multiple feed system may supply a plurality of preformed projections to a delivery head, which delivery head enables several, or whole arrays of projections to be attached in one instance.

An electrical current is applied through the projection to ground via the steel panel. By drawing the preformed projection away from the surface, an arc is created between the preformed projection and the component that leads to melting of the preformed projection tip and the formation of a molten pool in the surface of the steel component. The molten preformed projection tip is then plunged into the melted surface of the steel panel under the action of a spring to complete the weld. A shielding ferrule may be introduced to help contain molten material and shape the weld fillet. Here the weld is also completed in an argon atmosphere by means of a coaxial shielding gas supply.

The weld process time is ~10ms. Once complete the weld head is transferred using a computer controlled robot to the intended site of the next projection. Once in place, the process is repeated until the complete array of projections is formed. As previously stated, these arrays constructed in one or multiple operations.

The surface of the steel panel with projections is prepared for joining through surface treatment that may include grit blasting, degreasing through solvent washing and or plasma pre-treatment. A glass fibre fabric is laid up on the steel, and the fibre is pierced by the projections so that mechanical interlocking with the composite reinforcement is achieved. The method of interlocking and assembly is assisted by the very sharp point at the tip of the projections. In this application, the glass fabric is pierced and consolidated over the projections using atmospheric pressure, which is applied using a vacuum bagging arrangement typical of composite manufacturing processes.

A polymer matrix consisting of a thermosetting polymer (e.g. epoxy with curing agent) is then introduced to the glass preform in its liquid state with the projections in situ using a composite resin transfer moulding (RTM) process (e.g. vacuum assisted resin transfer moulding (VARTM)). The matrix is then cured so as to harden and form an adhesive bond with the steel component.

## Claims

1. A method of forming an array of projections on a surface of a metallic component, the method including the steps of bringing at least one preformed projection into at least close proximity to the surface of the component and causing a portion of the projection and a portion of the component in the region of an intersection thereof to at least partially melt, and causing them to be joined together.

2. A method according to claim 1 including the steps of bringing at least one preformed projection into at least close proximity to the surface of the component and causing an electrical current to flow between the projection and the surface of said component for a predetermined time, such that said current causes a partial melt of a portion of the projection and a portion of the component in the region of an intersection thereof.

3. A method according to claim 1 or claim 2 wherein a plurality of preformed projections are simultaneously brought into at least close proximity to the surface of the component, such that said plurality of projections are caused substantially simultaneously to be joined to said component.

4. A method according to claim 2 or claim 3 wherein the electrical current causes the partial melt by resistive heating or an electrical arc.

5. A method according to any one of claims 2 to 4 wherein said at least one preformed projection is brought into intimate contact with the surface of the component and an electrical current is initiated, the projection is simultaneously lifted away from the surface of the component to cause an electrical arc, said arc melting a portion of the surface of the component in the region of an intersection, and the adjacent tip of the projection; upon completion of a predetermined time, the projection is brought into intimate contact with the portion of partially molten surface of the component, and a weld formed.

6. A method according to claim 4 wherein said projection is moved towards the surface of the component in combination with the application of an electrical current, at a predetermined distance an electrical arc is created between the projection and the surface of the component in the region of an intersection, and the adjacent tip of the projection; upon completion of a predetermined time, the projection is brought into intimate contact with the portion of partially molten surface of the component, and a weld formed.

7. A method according to claim 4 wherein said projection is brought into electrical contact with the surface of the component in combination with the application of an electrical current to cause resistive heating in the region of an intersection, said resistive heating, upon completion of a predetermined time, causing a portion of the surface of the component to be partially molten and a portion of the projection to be partially molten, and a weld formed.

8. A method according to any one of the preceding claims, wherein the plurality of preformed projections are selected from at least two different metallic materials.

9. A method according to any one of the preceding claims, wherein the plurality of preformed projections are selected from at least two different 3D configurations.

10. A method according to any one of the preceding claims, wherein the preformed projections are non-symmetrical in cross section or irregularly shaped.

11. A metallic component suitable for forming a hybrid joint between said metallic component and a fibre reinforced composite component, the joint surface of the metallic component defining a plurality of preformed projections extending therefrom, wherein said projections are formed by a method according to any one of the preceding claims.

12. A method of forming a hybrid joint between a fibre reinforced composite component and a metallic component, the metallic component and the composite component each defining a joint surface for mating with the joint surface of the other to join the two components together and the composite component defining a free surface opposed to the joint surface thereof, the joint surface of the metallic component defining an array of preformed projections, prepared by a method according to any one of claims 1 to 10, extending therefrom with each projection defining a projection head at an end distal from the joint surface, the method including the steps of pressing together the joint surfaces of the two components whereby to cause the array of projections to penetrate through the fibre reinforcing material.

13. A method according to claim 12, modifying the effective cross sectional shape of the projection heads whereby to increase the constraint applied to the composite component against peeling of the composite component from the joint surface of the metallic component.
